# EUROPÄISCHE PATENTSCHRIFT

(11) **EP 1 134 562 B1**
(45) Veröffentlichungstag und Bekanntmachung des Hinweises auf die Patenterteilung: **18.11.2009**
(21) Anmeldenummer: 00105513.6
(22) Anmeldetag: 15.03.2000
(51) Int. Cl.: G01F 23/00, G01F 23/296, G08B 29/02

(54) **Verfahren zur Übertragung eines Messignals zwischen einer Messeinheit und einer Steuereinheit**
Transmission method of a measurement signal between a measurement and a control unit
Procédé de transmission d'un signal de mesure entre une unité de mesure et une unité de contrôle

(43) Veröffentlichungstag der Anmeldung: 19.09.2001
(73) Patentinhaber: Endress + Hauser GmbH + Co. KG, 79689 Maulburg (DE)
(72) Erfinder: Dreyer, Volker, 79541 Lörrach (DE); Müller, Alexander, 79585 Steinen (DE); Meier, Jürgen, 79713 Bad Säckingen (DE)
(74) Vertreter: Andres, Angelika Maria

(56) Entgegenhaltungen:
- EP-A- 0 220 498
- DE-A- 3 146 329
- DE-A1- 3 127 637
- DE-A1- 19 520 516
- FR-A- 2 382 795
- US-A- 5 777 550

## Beschreibung

Die Erfindung betrifft ein Verfahren zur Übertragung eines Meßsignals zwischen einer Meßeinheit und einer Steuereinheit.

In der Automatisierungs- und Prozeßleittechnik werden Meßgrößen häufig an verschiedenen Prozeßeinheiten erfaßt und einer weiter entfernt liegende Steuereinheit zugeleitet. Die Steuereinheit steuert aufgrund der Information über den Zustand der Prozeßeinheiten den Prozeßablauf.

Die Meßgrößen werden an den Prozeßeinheiten mit Hilfe von Meßeinheiten aufgenommen und in Meßsignale umgewandelt, die zu der zentralen Steuereinheit übertragen werden.

Die Meßsignale können kontinuierlich veränderliche Pegel oder aber auch diskrete Pegel annehmen, je nachdem ob eine kontinuierliche Meßgröße oder eine diskrete Meßgröße erfaßt wird.

Beispielsweise kann ein Grenzschalter für den Füllstand in einem Tankbehälter nur zwei Schaltzustände annehmen, "Grenzstand erreicht" bzw. "Grenzstand noch nicht erreicht". Diese Information wird als zeitlich gleichförmiges diskretes Meßsignal an die Steuereinheit übertragen. Ändert sich der Schaltzustand des Grenzschalters, z.B. weil die Flüssigkeit den Grenzstand erreicht, so ändert sich das Meßsignal entsprechend.

Tritt eine Fehlfunktion in der Meßeinheit auf, bei dem die Meßeinheit weiterhin das ursprüngliche gleichförmige Meßsignal abgibt, aber auf keine Änderungen der Meßgröße mehr reagiert, so kann die Fehlfunktion von der Steuereinheit nicht erkannt werden. Die Steuereinheit geht weiterhin von der Gültigkeit des übertragenen Meßsignals aus und steuert aufgrund dieser Fehlinformation den Prozeßablauf falsch.
Eine Prozeßsteuerung aufgrund eines ungültigen Meßsignals führt zu unerwünschten fehlerhaften Prozeßreaktionen. Insbesondere bei sicherheitsrelevanten Prozessen muß dies ausgeschlossen werden.

Die Offenlegungsschrift DE 31 27 637 A1 beschreibt eine Anordnung zur kapazitiven Feststellung des Füllstandes eines Mediums. Die Anordnung weist dabei einen Messwandler mit einer Messsonde und ein Auswertegerät auf. Vom Messwandler werden alternierend von der Kapazität der Sonde abhängige Messwertsignale und von einer Testkapazität abhängige Testsignale an das Auswertegerät übertragen. Die Testkapazität ist dabei derartig bemessen, dass sie sich von jeder im normalen Betrieb vorkommenden Sondenkapazität unterscheidet. Im Auswertegerät wird die Abfolge der Messwert- bzw. Testsignale zur Fehlerüberwachung herangezogen.

In der Patentschrift US 5,777,550 wird ein Sensor beschrieben, welcher über Ultraschallimpulse die Anwesenheit eines Mediums in einem Zwischenraum feststellt. Die Impulse werden von zwei piezoelektrischen Elementen empfangen bzw. erzeugt. Für eine Funktionsüberprüfung wird während einer Test-Bedingung auf ein Element ein Testsignal gegeben und das vom anderen Element empfangene Signal wird ausgewertet.

Der Offenlegungsschrift DE 195 20 516 A1 ist eine Anordnung zu entnehmen, in welcher ein Materialpegel zwischen zwei Ultraschallwandlern detektiert wird. Alternierend werden Signale im Hoch- bzw. Niederfrequenzbereich zwischen beiden Wandlern übertragen. Für die Überwachung des Zustands des Gerätes wird dabei ausgenutzt, dass im Niederfrequenzbereich die Übertragung sowohl durch ein Medium zwischen den Wandlern, als auch durch den Sensor selbst stattfindet.

Aufgabe der Erfindung ist es ein Verfahren zur Übertragung eines Meßsignals zwischen einer Meßeinheit und einer Steuereinheit anzugeben, bei dem eine Fehlfunktion der Meßeinheit mit Hilfe der Steuereinheit erkennbar ist.

Gelöst wird diese Aufgabe durch ein Verfahren zur Übertragung eines Meßsignals zwischen einer Meßeinheit und einer Steuereinheit gemäß den Merkmalen des Anspruchs 1.

Durch dieses Verfahren ist sichergestellt, daß eine Fehlfunktion der Meßeinheit einfach erkannt wird und eine Prozeßsteuerung aufgrund eines fehlerhaften Meßsignals vermieden wird. Dadurch erhöht sich die Prozeßsicherheit erheblich.

Vorteilhafte Weiterentwicklungen der Erfindung sind in den Unteransprüchen angegeben.

Nachfolgend ist die Erfindung anhand eines in der Zeichnung dargestellten bevorzugten Ausführungsbeispiel näher erläutert. Es zeigen:
- Fig. 1: eine schematische Darstellung einer Meßeinheit, die mit einer Auswerteeinheit verbunden ist, und
- Fig. 2: ein Meßsignal in zeitlicher Abfolge.

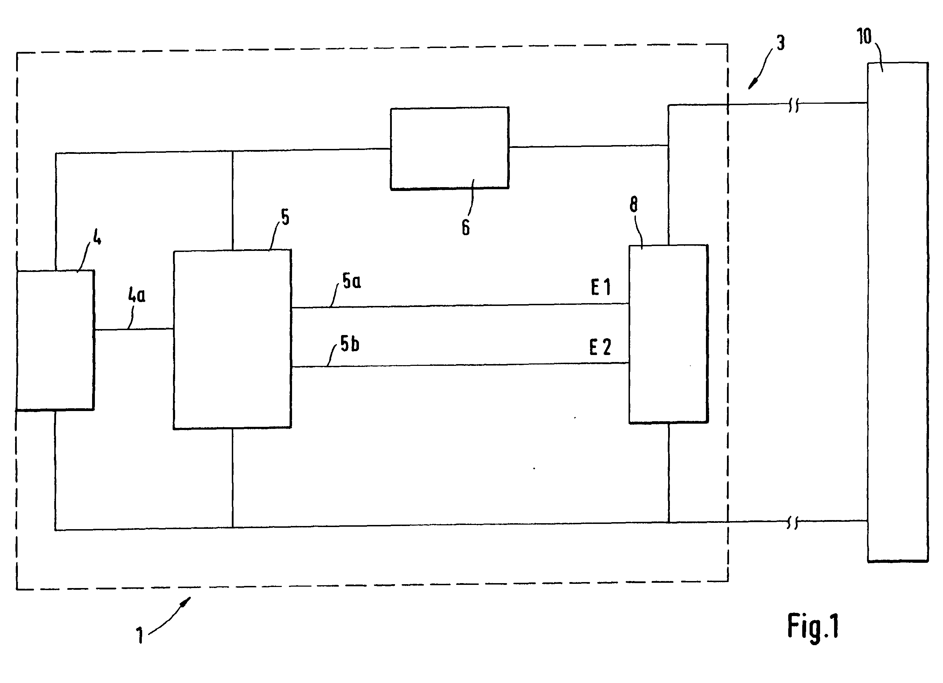

Fig. 1 zeigt eine Meßeinheit 1, die mit einer Steuereinheit 10 über eine Übertragungsleitung 3 verbunden ist.

Die Meßeinheit 1 besteht im wesentlichen aus einem Sensor 4, der zur Erfassung einer Meßgröße dient, einer Auswerteeinheit 5 und einem Meßwandler 8, der zur Übertragung der Information der Meßgröße dient.

Bei der Meßgröße kann es sich z.B. um den Grenzstand in einem mit Flüssigkeit gefüllten Tankbehälter handeln. Der Sensor 4 erkennt dann, ob die Flüssigkeit im Tankbehälter einen bestimmten Grenzstand erreicht oder nicht.

Der Sensor 4 ist mit der Auswerteeinheit 5 über eine Verbindungsleitung 4a verbunden. In der Auswerteeinheit 5 wird das Sensorsignal S des Sensors 4 ausgewertet und ein entsprechendes Steuersignal erzeugt.

Zur Spannungsversorgung des Sensors 4 und der Auswerteeinheit 2 dient eine Spannungsversorgungseinheit 6, die direkt mit einer Übertragungsleitung 3 verbunden ist.

Die Übertragungsleitung 3 führt zu der Steuereinheit 10, die zur Prozeßsteuerung dient. Nicht näher dargestellt sind weitere Sensoren und Aktoren, die ebenfalls mit der Steuereinheit 10 verbunden sind. Diese nicht dargestellten Sensoren liefern der Steuereinheit 10 weitere Informationen über Prozeßvariablen (z.B. Druck, Temperatur, Durchfluß) an bestimmten Prozeßeinheiten. Mit Hilfe der nicht dargestellten Aktoren steuert die Steuereinheit 10 den Prozeßablauf.

Meldet z.B. ein Grenzstandschalter der Steuereinheit 10 daß ein Grenzstand erreicht ist, so steuert die Steuereinheit 10 ein im Zulauf zu dem Tankbehälter angeordnetes Ventil an. Durch die Ansteuerung wird das Ventil geschlossen und der weitere Zufluß von Flüssigkeit in den Tankbehälter verhindert.

Von der Auswerteeinheit 5 führen zwei Steuerleitungen 5a, 5b zu einem Meßwandler 8, der zur Erzeugung des eigentlichen Meßsignals dient.

Bei dem Meßwandler 8 handelt es sich im dargestellten Fall um eine steuerbare Stromquelle, deren Ausgangsstrom von den an seinen beiden Eingängen E1 bzw. E2 anliegenden Steuersignalen abhängt.

Nachfolgend ist die Funktion der Meßeinheit 1 näher beschrieben.

Der Sensor 4 erfaßt eine Meßgröße M. Dieser Meßgröße M entspricht ein bestimmtes elektrisches Sensorsignal S, das der Auswerteeinheit 5 zugeleitet wird.

In der Auswerteeinheit 5 wird das Sensorsignal S ausgewertet. Handelt es sich bei dem Sensor 4 z.B. um einen bekannten nach dem Schwingabelprinzip arbeitenden Schwingabelgrenzschalter, so ist die Frequenz des Sensorsignals S abhängig davon, ob der Grenzschalter mit Flüssigkeit bedeckt ist oder nicht. Die Frequenz des Sensorsignals S wird in der Auswerteeinheit 5 überwacht. Die Auswerteeinheit 5 erzeugt, je nachdem welche Frequenz das Sensorsignal besitzt, ein entsprechendes Steuersignal A1 (nicht bedeckt) bzw. A2 (bedeckt), das über die Steuerleitung 5a dem Eingang E1 des Meßwandler 8 zugeführt wird. Das Steuersignal besitzt nur zwei Werte A1 bzw. A2.

Zusätzlich erzeugt die Auswerteeinheit 5 ein zeitlich veränderliches Steuersignal A2, das über die Steuerleitung 5b dem Eingang E2 des Meßwandler 8 zugeführt wird.

Weist die Auswerteeinheit 5 einen Mikroprozessor auf, so nimmt das Steuersignal A2 die beiden digitalen Pegelzustände "low" bzw. "high" an.

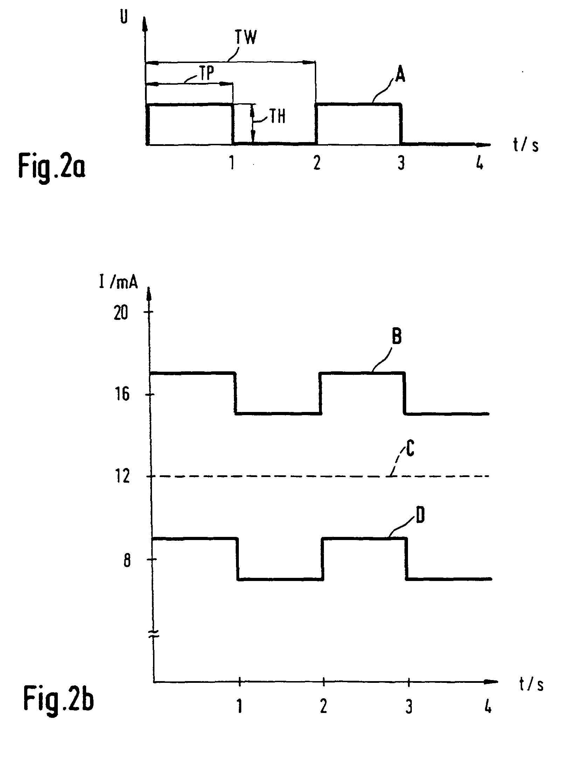

Bei dem zeitlich veränderlichen Signal A2 handelt es sich um ein Rechtecksignal, das in seiner Form dem in Fig. 2 dargestellten Signal entspricht.

Der Meßwandler 8 erzeugt an seinem Ausgang, das in Fig. 2 abgebildete Meßsignal M.

Das Meßsignal M besteht aus einem konstanten Anteil 8mA bzw. 16mA, dem ein zeitlich veränderliches Zusatzsignal Z überlagert ist. Das Meßsignal kann somit nur zwei unterschiedliche Pegel annehmen.

Im dargestellten Fall besteht das zeitlich veränderliche Zusatzsignal Z aus einer periodischen Pulsfolge P, mit einer Pulsbreite TP = 1 sec, Pulshöhe TH= 1 mA und einer Wiederholzeit TW = 2 sec. Selbstverständlich sind diese spezielle Werte nur beispielhaft.

Die Pulsfolge entspricht dem Steuersignal A2, das von der Auswerteeinheit 5 erzeugt wird.

In der Steuereinheit 10 wird das Meßsignal M ausgewertet. Weist das Meßsignal M das richtige Zusatzsignal Z auf, so kann daraus geschlossen werden, daß die Auswerteeinheit 2 ordnungsgemäß funktioniert.

Weist das Meßsignal M jedoch kein Zusatzsignal auf, so bedeutet dies, daß die Auswerteeinheit 5 nicht ordnungsgemäß arbeitet.

In diesem Fall kann aus dem mittleren Pegel des Meßsignals nicht mehr auf die Meßgröße geschlossen werden.

Dies gilt auch, wenn das Meßsignal M ein fehlerhaftes Zusatzsignal z.B. mit einer falschen Periode aufweist.

In diesem Fall erzeugt die Steuereinheit 10 ein Alarmsignal, das die fehlerhafte Funktion des Meßgerätes 1 anzeigt.

Besonders geeignet ist das erfindungsgemäße Verfahren, wenn die Übertragungsleitung eine 2-Draht-Leitung ist. D.h. die Spannungsversorgung der Meßeinheit 1 und die Signalübertragung über eine gemeinsame Verbindungsleitung der Übertragungsleitung 3 erfolgt.

Häufig sind 2-Draht-Leitungen als 4-20mA Stromschleifen ausgelegt. Die Meßsignale die von der Meßeinheit 1 zur Steuereinheit 10 übertragen werden, sind dann Stromsignale, die im Bereich von 4-20mA liegen.

Mit dem erfindungsgemäßen Verfahren ist in einfacher Weise eine Überwachung der Meßeinheit 1 von der Steuereinheit 10 aus möglich.

Sobald das Zusatzsignal abweicht, kann auf eine Fehlfunktion der Meßeinheit 1 geschlossen werden. Diese Fehlfunktion wird dann durch eine entsprechende Anzeige von der Steuereinheit 10 angezeigt.

## Patentansprüche

1. Verfahren zur Übertragung eines Meßsignals zwischen einer Meßeinheit und einer Steuereinheit,
**dadurch gekennzeichnet,**
**daß** dem gleichförmigen Meßsignal ein zeitlich alternierendes Zusatzsignal überlagert ist, das in der Steuereinheit zur Funktionsüberprüfung der Meßeinheit ausgewertet wird
und
**dass**, falls bei der Auswertung das Zusatzsignal fehlerhaft ist, ein Alarmsignal erzeugt wird.

2. Verfahren nach Anspruch 1, **dadurch gekennzeichnet, daß** das Zusatzsignal ein Rechtecksignal ist.

3. Verfahren nach einem der vorhergehenden Ansprüche, **dadurch gekennzeichnet, daß** das Meßsignal nur zwei Pegel annehmen kann.

4. Verfahren nach Anspruch 4, **dadurch gekennzeichnet, daß** die Meßeinheit ein Grenzschalter ist.

5. Verfahren nach einem der vorhergehenden Ansprüche, **dadurch gekennzeichnet, daß** die Übertragung des Meßsignals über eine 2-Draht-Leitung erfolgt.

6. Verfahren nach Anspruch 5, **dadurch gekennzeichnet, daß** die 2-Draht-Leitung als 4-20mA Stromschleife ausgelegt ist.

## Claims

1. Method for transmitting a measuring signal between a measuring unit and a control unit, **characterized in that** a supplementary signal that alternates over time is superimposed on the uniform measuring signal and said supplementary signal is evaluated in the control unit to check the function of the measuring unit, and **characterized in that** an alarm signal is generated if the supplementary signal is found to be faulty during the evaluation process.

2. Method as per Claim 1, **characterized in that** the supplementary signal is a square wave signal.

3. Method as per one of the previous claims, **characterized in that** the measuring signal can only assume two levels.

4. Method as per Claim 4, **characterized in that** the measuring unit is a limit switch.

5. Method as per one of the previous claims, **characterized in that** the measuring signal is transmitted via a two-wire cable.

6. Method as per Claim 5, **characterized in that** the two-wire cable is designed as a 4-20 mA current loop.

## Revendications

1. Procédé destiné à la transmission d'un signal de mesure entre une unité de mesure et une unité de commande,
**caractérisé en ce**
**qu'**un signal supplémentaire alternant dans le temps est superposé au signal de mesure monotone, lequel signal supplémentaire est interprété dans l'unité de commande à des fins de contrôle de fonctionnement de l'unité de mesure
et
**qu'**un signal d'alarme est généré lorsque le signal supplémentaire est erroné lors de l'interprétation.

2. Procédé selon la revendication 1, **caractérisé en ce que** le signal supplémentaire est un signal rectangulaire.

3. Procédé selon l'une des revendications précédentes, **caractérisé en ce que** le signal de mesure ne peut adopter que deux niveaux.

4. Procédé selon la revendication 4, **caractérisé en ce que** l'unité de mesure est un détecteur de niveau.

5. Procédé selon l'une des revendications précédentes, **caractérisé en ce que** la transmission du signal de mesure est réalisée par l'intermédiaire d'une liaison bifilaire.

6. Procédé selon la revendication 5, **caractérisé en ce que** la liaison bifilaire est conçue en tant que boucle de courant 4-20 mA.
